# EUROPÄISCHE PATENTANMELDUNG

(11) **EP 3 181 857 A1**
(43) Veröffentlichungstag der Anmeldung: **21.06.2017**
(21) Anmeldenummer: 16002634.0
(22) Anmeldetag: 09.12.2016
(51) Int. Cl.: F02B 63/02, F16C 3/06, F16L 23/032, F02D 41/22, F02B 77/08

(54) **HANDGEFÜHRTES ARBEITSGERÄT**

(30) Priorität: 15.12.2015 EP 15003564
(71) Anmelder: Andreas Stihl AG & Co. KG, 71336 Waiblingen (DE)
(72) Erfinder: Wolf, Günter, D-71570 Oppenweiler (DE); Weissert, Wolfgang, D-71364 Winnenden (DE)
(74) Vertreter: Reinhardt, Annette

(57) **Zusammenfassung**

Die Erfindung betrifft ein handgeführtes Arbeitsgerät (1) und ein Verfahren zu dessen Herstellung. Das handgeführte Arbeitsgerät umfasst einen Verbrennungsmotor (2) mit einem Zylinder (3), in dem ein von einem Kolben (4) begrenzter Brennraum (5) ausgebildet ist. Der Kolben (4) treibt im Betrieb über ein Pleuel (6) eine Kurbelwelle (7) um eine Drehachse (8) der Kurbelwelle (7) rotierend an. Das Arbeitsgerät (1) umfasst eine Steuereinrichtung (13, 13', 13 ") und eine Zündeinrichtung (10). Die Zündeinrichtung (10) umfasst eine Zündkerze (12). Die Kurbelwelle (7) ist drehfest mit einem Träger für mindestens einen Signalgeber verbunden. Der Signalgeber ist an dem Träger fixiert. Die Zündeinrichtung (10) zündet unter Nutzung eines vom Signalgeber erzeugten Signals zu einem von der Steuereinrichtung (13, 13', 13") vorgegebenen Zündzeitpunkt die Zündkerze (12). Der Träger besitzt eine polygonkegelförmige Aufnahme (14). Die Kurbelwelle (7) weist einen polygonkegelförmigen Abschnitt (15) auf, der mit der polygonkegelförmigen Aufnahme (14) des Trägers korrespondiert und in der polygonkegelförmigen Aufnahme (14) angeordnet ist. Für das Verfahren weist die Kurbelwelle (7) ein Ausrichtungselement (24) auf. Der polygonkegelförmige Abschnitt (15) der Kurbelwelle (7) wird derart geschliffen, dass der polygonkegelförmige Abschnitt (15) in vordefinierter Weise zum Ausrichtungselement (24) orientiert ist.

## Beschreibung

Die Erfindung betrifft ein handgeführtes Arbeitsgerät nach dem Oberbegriff des Anspruchs 1 und ein Verfahren zu dessen Herstellung.

Aus der DE 10 2007 037 581 A1 ist ein handgeführtes Arbeitsgerät mit einem Verbrennungsmotor bekannt, bei dem der Rotor eines Generators drehfest mit dem Gebläserad des Verbrennungsmotors verbunden ist. Als Rotor ist ein Magnetring mit Dauermagneten vorgesehen. Der Generator wird als Signalquelle genutzt, um ein Zündwinkelsignal abzugeben. Es hat sich gezeigt, dass das Laufverhalten des Verbrennungsmotors nicht immer optimal ist.

Der Erfindung liegt die Aufgabe zugrunde, ein Arbeitsgerät der gattungsgemäßen Art zu schaffen, das ein verbessertes Laufverhalten aufweist.

Eine weitere Aufgabe der Erfindung liegt darin, ein Verfahren zur Herstellung eines Arbeitsgeräts anzugeben.

Die Aufgabe wird bezüglich des Arbeitsgeräts durch ein Arbeitsgerät mit den Merkmalen des Anspruchs 1 gelöst.

Bezüglich des Verfahrens wird die Aufgabe durch ein Verfahren mit den Merkmalen des Anspruchs 15 gelöst.

Um ein gutes Laufverhalten eines Verbrennungsmotors zu erreichen, wird das Gemisch im Brennraum zu einem vorbestimmten Zeitpunkt gezündet. Der Zündzeitpunkt kann in Abhängigkeit von Betriebsparametern des Verbrennungsmotors in einer Steuereinrichtung festgelegt werden. Es hat sich gezeigt, dass der tatsächliche Zeitpunkt, zu dem ein Zündfunke im Brennraum des Verbrennungsmotors ausgelöst wird, von dem in der Steuereinrichtung ermittelten theoretischen Zündzeitpunkt abweichen kann.

Üblicherweise ist zur Verbindung der Kurbelwelle mit dem Träger eine Passfederverbindung vorgesehen, die über eine Kegelpressverbindung axial fixiert wird. Eine solche Passfederverbindung ist vor der Fixierung über die Kegelpressverbindung in Umfangsrichtung mit Spiel behaftet. Es hat sich gezeigt, dass dadurch die Lage des Signalgebers relativ zur Lage des Kolbens im Rahmen der Toleranzen der Passfederverbindung von Motor zu Motor variieren kann. Der Zeitpunkt, zu dem tatsächlich ein Zündfunke ausgelöst wird, kann deshalb von dem in der Steuereinrichtung ermittelten Zündzeitpunkt abweichen. Es hat sich gezeigt, dass diese Abweichung zu einem ungünstigen Laufverhalten eines Verbrennungsmotors führen kann.

Beim erfindungsgemäßen Arbeitsgerät ist vorgesehen, dass der Träger eine polygonkegelförmige Aufnahme besitzt, und dass die Kurbelwelle einen polygonkegelförmigen Abschnitt aufweist, der mit der polygonkegelförmigen Aufnahme des Trägers korrespondiert und in der polygonkegelförmigen Aufnahme angeordnet ist. Bei der Montage des Trägers auf der Kurbelwelle wird der polygonkegelförmige Abschnitt der Kurbelwelle in die polygonkegelförmige Aufnahme des Trägers eingebracht. Dadurch wird eine genaue Relativpositionierung des Trägers und der Kurbelwelle zueinander erreicht. Dadurch ergibt sich eine genaue Positionierung des am Träger fixierten Signalgebers relativ zur Drehlage der Kurbelwelle und damit zur Lage des Kolbens. Die tatsächliche Zündung des Gemischs im Brennraum kann dadurch vergleichsweise exakt zu dem in der Steuereinrichtung ermittelten, gewünschten Zündzeitpunkt erfolgen. Dadurch kann ein gutes Laufverhalten des Verbrennungsmotors erreicht werden.

Die Polygonverbindung von Kurbelwelle und Träger bewirkt eine gute Drehmomentübertragung von der Kurbelwelle auf den Träger. Da die Form des polygonkegelförmigen Abschnitts der Kurbelwelle mit der Form der polygonkegelförmigen Aufnahme korrespondiert, kann ein Großteil der Mantelfläche des polygonkegelförmigen Abschnitts der Kurbelwelle zur Drehmomentübertragung genutzt werden. Die axiale Länge der Polygonverbindung kann daher kürzer als bei bekannten Passfederverbindungen sein. Da ein Großteil der Mantelfläche des polygonkegelförmigen Abschnitts der Kurbelwelle zur Drehmomentübertragung genutzt wird, erfolgt eine Übertragung des Drehmoments von der Kurbelwelle auf den Träger mit gleichmäßiger Spannungsverteilung. Es ergibt sich eine geringe Flächenpressung zwischen Träger und Kurbelwelle. Dies erhöht die Festigkeit und die Stabilität der Polygonverbindung, und die Gefahr einer Beschädigung insbesondere des Trägers ist im Vergleich zum Stand der Technik aufgrund der deutlich geringeren Kerbwirkung geringer.

Im Vergleich zum Stand der Technik ist eine geringere Vorspannkraft zur Fixierung des Trägers auf der Kurbelwelle notwendig. Im Stand der Technik erfolgt die Drehmomentübertragung in hohem Maß durch die Reibungskraft, die durch das Anpressen des Trägers auf die Kurbelwelle vorhanden ist. Durch die Polygonkegelverbindung kann ein Großteil der Mantelfläche des polygonkegelförmigen Abschnitts der Kurbelwelle zur Drehmomentübertragung genutzt werden, und es ist eine geringere Vorspannkraft zur Fixierung des Trägers auf der Kurbelwelle erforderlich. Im Vergleich zum Stand der Technik entfällt die Passfeder, so dass die Anzahl der zu montierenden Bauteile verringert ist.

Ein Polygonkegel ist ein Kegel, dessen Querschnitt von der Kreisform abweicht. Vorteilhaft weicht der Querschnitt des polygonkegelförmigen Abschnitts von der Kreisform ab. Vorteilhaft besitzt der polygonkegelförmige Abschnitt mindestens zwei Seitenoberflächen, die gegenüber einer Kreiskegelform abgeflacht sind. Die Mantelfläche des Polygonkegels ist also aus mehreren Seitenoberflächen gebildet. In vorteilhafter Gestaltung besitzt der polygonkegelförmige Abschnitt zwei bis neun abgeflachte Seitenoberflächen. Als besonders vorteilhaft werden drei abgeflachte Seitenoberflächen angesehen. Mindestens eine, insbesondere alle Seitenoberflächen sind in vorteilhafter Gestaltung mindestens teilweise abgerundet ausgebildet. In bevorzugter Gestaltung ist mindestens eine, insbesondere alle Seitenoberflächen vollständig mit einer Rundung ausgebildet. Es kann jedoch auch vorgesehen sein, dass mindestens eine, insbesondere alle Seitenoberflächen mindestens teilweise eben ausgebildet sind. In bevorzugter Gestaltung besitzt mindestens eine, insbesondere alle Seitenoberflächen mindestens in einem Abschnitt eine konvexe Krümmung. Bevorzugt ist mindestens eine, insbesondere alle Seitenoberflächen vollständig konvex ausgebildet. Auch eine konkave Krümmung mindestens eines Abschnitts einer oder mehrerer, insbesondere aller Seitenoberflächen kann vorteilhaft sein. Bei einer konkaven Krümmung mindestens einer Seitenfläche beträgt der Winkel zwischen der konkaven Seitenoberfläche sowie der benachbarten Seitenoberfläche unter 180°.

Bevorzugt sind die Querschnitte des polygonkegelförmigen Abschnitts in jeder Schnittfläche senkrecht zur Drehachse der Kurbelwelle ähnlich zueinander. Die Querschnitte können durch eine geometrische Ähnlichkeitsabbildung, nämlich durch eine zentrische Streckung, ineinander überführt werden.

Vorteilhaft besitzt der polygonkegelförmige Abschnitt der Kurbelwelle mindestens zwei erste Seitenlinien, auf denen Punkte liegen, die in Schnittebenen senkrecht zur Drehachse den größten Abstand von der Drehachse aufweisen. In vorteilhafter Gestaltung liegt mindestens eine, insbesondere alle ersten Seitenlinien im Bereich einer Krümmung. Der polygonkegelförmige Abschnitt ist demnach mit abgerundeten Ecken ausgebildet. Die ersten Seitenlinien, die die Punkte mit größtem Abschnitt zur Drehachse im jeweiligen Querschnitt aufweisen, liegen vorteilhaft nicht auf einer Ecke, sondern in einer Rundung. Die polygonkegelförmige Aufnahme ist entsprechend ausgebildet. Dadurch, dass die Bereiche mit dem größten Abstand zur Drehachse jeweils in einer Krümmung liegen, ist die Kerbwirkung in der polygonkegelförmigen Aufnahme bei der Übertragung von Drehmomenten reduziert. Vorteilhaft schließt in Umfangsrichtung an jede erste Seitenlinie zumindest an einer Seite eine Krümmung an. Dies ist insbesondere vorteilhaft, wenn der polygonkegelförmige Abschnitt mindestens einen ebenen Bereich besitzt. Vorteilhaft besitzen zwei in Umfangsrichtung aneinander angrenzende ebene Bereiche zwischen sich einen gekrümmt verlaufenden Bereich. Bevorzugt ist mindestens ein ebener Bereich an einer ersten Seitenlinie angeordnet. Dadurch können Spannungsspitzen an den ersten Seitenlinien reduziert werden. Der mindestens eine ebene Bereich ist dabei vorteilhaft sehr klein ausgebildet und erstreckt sich insbesondere über weniger als 1 mm.

Bevorzugt ist der polygonkegelförmige Abschnitt in jedem Querschnitt über seinen gesamten Umfang gekrümmt ausgebildet, insbesondere konvex gekrümmt. Der polygonkegelförmige Abschnitt besitzt vorteilhaft einen stetigen Querschnittsverlauf ohne scharfe Kanten.

Der polygonkegelförmige Abschnitt der Kurbelwelle besitzt vorteilhaft mindestens zwei zweite Seitenlinien, auf denen Punkte liegen, die in Schnittebenen senkrecht zur Drehachse den kleinsten Abstand von der Drehachse aufweisen. Vorteilhaft liegt mindestens eine, insbesondere alle zweiten Seitenlinien im Bereich einer Krümmung. Vorteilhaft ist der polygonkegelförmige Abschnitt mit einem gleichmäßigen Querschnitt ausgebildet, so dass sich die ersten Seitenlinien und die zweiten Seitenlinien in Umfangsrichtung abwechseln. Es kann jedoch auch vorgesehen sein, dass zwei erste Seitenlinien vorgesehen sind, zwischen denen sich keine zweite Seitenlinie, sondern ein Bereich erstreckt, dessen Abstand zur Drehachse zwischen dem kleinsten und dem größten Abstand zur Drehachse liegt.

In bevorzugter Gestaltung erstreckt sich jede Seitenoberfläche von einer ersten Seitenlinie zu einer in Umfangsrichtung benachbarten ersten Seitenlinie. Vorteilhaft enthält jede Seitenoberfläche eine zweite Seitenlinie. In bevorzugter Gestaltung ist die in Winkelgrad um die Drehachse gemessene Länge aller Seitenoberflächen gleich. In bevorzugter Gestaltung ist die Form aller Seitenoberflächen gleich.

Vorteilhaft ist der Winkel zwischen benachbarten Seitenoberflächen nicht größer als 180°. Der Winkel zwischen benachbarten Seitenoberflächen ist dabei zwischen den in Umfangsrichtung liegenden Mitten der Seitenoberflächen gemessen. Sind die Seitenoberflächen in ihrer Mitte gekrümmt ausgebildet, so ist der Winkel zur Tangente an die Mitte der Seitenoberfläche gemessen. Der Winkel zwischen den benachbarten Seitenoberflächen ist dabei jeweils so gemessen, dass der Winkel in Richtung auf die Drehachse öffnet. Vorteilhaft besitzt der Querschnitt der polygonkegelförmigen Aufnahme keine zwei Seitenoberflächen, zwischen denen ein zur Drehachse öffnender Winkel von mehr als 180° gebildet ist. Der Querschnitt des polygonkegelförmigen Abschnitts besitzt demnach keine nach innen ragenden Abschnitte wie beispielsweise Längsnuten oder dgl.

Das Verhältnis der Anzahl der Signalgeber auf dem Träger zur Anzahl der Seitenoberflächen ist vorteilhaft ganzzahlig. Dadurch kann der Träger in unterschiedlichen Drehlagen an der Kurbelwelle montiert werden. Die Orientierung der Signalgeber ist bezogen auf die Seitenoberflächen jeweils gleich. Die Signalgeber sind dabei vorteilhaft in gleichmäßigem Winkelabstand um die Kurbelwelle angeordnet.

Der Querschnitt des polygonkegelförmigen Abschnitts besitzt in jeder Schnittebene senkrecht zur Drehachse einen Umkreis und einen Inkreis. Das Verhältnis des Radius des Umkreises zum Radius des Inkreises beträgt vorteilhaft von 1,05 bis 1,2. In besonders vorteilhafter Gestaltung ist ein Verhältnis des Radius des Umkreises zum Radius des Inkreises von 1,09 bis 1,15 vorgesehen. In vorteilhafter Gestaltung liegt der Mittelpunkt des Umkreises des polygonkegelförmigen Abschnitts in jeder Schnittebene senkrecht zur Drehachse in der Drehachse der Kurbelwelle. Auf dem Umkreis liegen demnach alle Punkte mit größtem Abstand zur Drehachse. Auf dem Inkreis liegen alle Punkte mit dem kleinsten Abstand zur Drehachse.

Der Krümmungsradius der Seitenoberflächen ist vorteilhaft größer als der Radius des Umkreises. Der Radius des Querschnitts an den Punkten mit dem größten Abstand zur Drehachse ist insbesondere kleiner als der Radius des Inkreises um den Querschnitt. Vorteilhaft ist vorgesehen, dass in der Steuereinrichtung für eine vorgegebene Position und Bewegungsrichtung des Kolbens im Zylinder eine Sollposition des Signalgebers hinterlegt ist, und dass die tatsächliche Position des Signalgebers in der vorgegebenen Position des Kolbens um weniger als 2,5° Kurbelwellenwinkel, insbesondere um weniger als 2° Kurbelwellenwinkel, von der Sollposition abweicht. Die tatsächliche Position und die Sollposition sind hierbei Winkelpositionen in Bezug auf die Drehlage bei einer Drehung um die Drehachse der Kurbelwelle. Dadurch, dass die Abweichung zwischen der tatsächlichen Position und der Sollposition des Signalgebers bei einer vorgegebenen Position des Kolbens kleiner als 2,5° ist, kann ein vom Signalgeber in der vorgegebenen Position des Kolbens erzeugtes Signal dazu benutzt werden, den Zündfunken mit hoher Genauigkeit zu dem in der Steuereinrichtung ermittelten, gewünschten Zündzeitpunkt auszulösen. Der Zeitpunkt der Zündfunkenauslösung kann dabei vom Steuergerät oder durch eine sogenannte Magnetzündung bestimmt sein. Bei der Magnetzündung wird üblicherweise die zur Bildung des Zündfunkens erforderliche Zündspannung durch die Induktion einer Spannung in einer Spule mittels eines oder mehrerer Dauermagneten erzeugt. Die induzierte Spannung wird in einem Kondensator zwischengespeichert. Das vom Signalgeber erzeugte Signal kann dann zur Auslösung des Zündfunkens genutzt werden. Der Dauermagnet bzw. die Dauermagnete sind vorzugsweise in den umlaufenden Rand des Trägers eingegossen.

Vorteilhaft ist vorgesehen, dass der polygonkegelförmige Abschnitt der Kurbelwelle eine Mantelfläche aufweist, und dass die Mantelfläche in einer Ebene, in der auch die Drehachse der Kurbelwelle liegt, in einem Winkel von 6° bis 12°, insbesondere von 8,5° bis 10°, zur Drehachse orientiert ist. Durch die kegelförmige Gestaltung des polygonkegelförmigen Abschnitts der Kurbelwelle ist es möglich, die polygonkegelförmige Aufnahme des Trägers auf den polygonkegelförmigen Abschnitt der Kurbelwelle zu pressen und den Träger lediglich mit einem Befestigungselement auf der Kurbelwelle zu befestigen. Bei einer Orientierung der Mantelfläche in einer Ebene, in der auch die Drehachse liegt, in einem Winkel von 6° bis 12° zur Drehachse verteilt sich die Anpresskraft beim Anpressen des Trägers auf die Kurbelwelle auf eine große Fläche. Dadurch ist die Sprengkraft auf die polygonkegelförmige Aufnahme des Trägers beim Anpressen des Trägers auf die Kurbelwelle klein. Ein Lösen der Kurbelwelle aus der Aufnahme ist auf einfache Weise möglich, da im angegebenen Winkelbereich keine Selbsthemmung von polygonkegelförmiger Aufnahme des Trägers und polygonkegelförmigem Abschnitt der Kurbelwelle stattfindet. Vorteilhaft verringert sich der Querschnitt des polygonkegelförmigen Abschnitts der Kurbelwelle senkrecht zur Drehachse der Kurbelwelle in Richtung der Längsachse der Kurbelwelle vom Zylinder weg. Zweckmäßig ist das Befestigungselement zum Anpressen des Trägers auf die Kurbelwelle eine Mutter. Durch die Orientierung der Mantelfläche in einem Winkel von 6° bis 12° zur Drehachse erfolgt der Krafteintrag in die polygonförmige Aufnahme und den Träger gleichmäßig.

Vorteilhaft ist vorgesehen, dass der polygonkegelförmige Abschnitt der Kurbelwelle mindestens drei Seitenlinien aufweist, auf denen Punkte liegen, die in Schnittebenen senkrecht zur Drehachse den größten Abstand von der Drehachse aufweisen. Dadurch, dass der polygonkegelförmige Abschnitt mindestens drei solcher Seitenlinien aufweist, sind die Kräfte zur Übertragung des Drehmoments von der Kurbelwelle auf den Träger gleichmäßig auf die Mantelfläche des polygonkegelförmigen Abschnitts und auf die polygonkegelförmige Aufnahme verteilt. Die Seitenlinien sind vorteilhaft je um 120° zueinander versetzt. Bevorzugt weist der polygonkegelförmige Abschnitt der Kurbelwelle genau drei solcher Seitenlinien auf. Bevorzugt ist eine Querschnittsfläche des polygonkegelförmigen Abschnitts senkrecht zur Drehachse ein dreiseitiges Polygon, insbesondere ein P3G-Polygon. Ein polygonkegelförmiger Abschnitt mit Querschnitten in Form von P3G-Polygonen ist von besonderem Vorteil, weil auf diese Weise die Drehmomentübertragung vom polygonkegelförmigen Abschnitt der Kurbelwelle auf den Träger mit gleichmäßiger Spannungsverteilung möglich ist und das P3G-Polygon auch mit vergleichsweise geringem Außenmaß bzw. geringem Innenmaß gut hergestellt werden kann.

Vorteilhaft ist vorgesehen, dass an dem Träger ein Magnetring angeordnet ist, an dem der mindestens eine Signalgeber fixiert ist, und dass Positioniermittel zur Positionierung des Magnetrings auf dem Träger relativ zu einer der Seitenlinien des polygonkegelförmigen Abschnitts vorgesehen sind. Über den Magnetring kann der Signalgeber auf einfache Weise an dem Träger angeordnet werden. Durch die Positioniermittel ist eine genaue Positionierung des Magnetrings, und damit des Signalgebers, relativ zu einer der Seitenlinien des polygonkegelförmigen Abschnitts gegeben.

Vorteilhaft ist vorgesehen, dass mehrere Signalgeber kreisförmig um die Drehachse in regelmäßigen Abständen zueinander am Träger fixiert sind. Dadurch können im Betrieb des handgeführten Arbeitsgeräts während einer Umdrehung der Kurbelwelle mehrere Signale durch die verschiedenen Signalgeber generiert werden. Insbesondere sind die Signalgeber gleichzeitig Teil eines Generators, der zur Stromgewinnung genutzt wird.

Vorteilhaft ist vorgesehen, dass der Träger ein Schwungrand ist. Vorteilhaft ist weiterhin vorgesehen, dass der Träger ein Lüfterrad ist. Das Lüfterrad weist vorteilhaft auf der dem Zylinder abgewandten Seite Luftleitelemente auf. Das Lüfterrad dient bevorzugt dazu, Kühlluft für den Verbrennungsmotor zu fördern.

Vorteilhaft ist vorgesehen, dass der Signalgeber ein Magnet ist, der in einer Spule bei Rotation des Trägers ein Spanungssignal induziert, und dass das Spannungssignal das vom Signalgeber erzeugte Signal ist. Auf diese Weise kann die Signalerzeugung auf einfache Weise erfolgen.

Vorteilhaft ist vorgesehen, dass die Spule Teil der Zündeinrichtung ist. Die Spule kann sowohl zur Erzeugung des Signals als auch zur Generierung der für die Erzeugung eines Zündfunkens benötigten Spannung genutzt werden.

Vorteilhaft ist vorgesehen, dass ein Drucksensor am Kurbelgehäuse zur Messung des Drucks im Kurbelgehäuse angeordnet ist. Der Drucksensor misst zu mindestens einem, bestimmten Zeitpunkt den Druck im Kurbelgehäuse. Der Zeitpunkt für die Messung des Drucks ist von der Steuereinrichtung in Abhängigkeit des von dem Signalgeber erzeugten Signals bestimmt. Auf diese Weise kann der Druck im Kurbelgehäuse zu Zeitpunkten bestimmt werden, in denen der Kolben sich in einer vorgegebenen Position befindet.

Der Verbrennungsmotor ist insbesondere ein Zweitaktmotor. Über den Druck im Kurbelgehäuse wird insbesondere der Luftmassenstrom durch den Brennraum ermittelt, der zur Bestimmung der zuzuführenden Menge von Kraftstoff genutzt werden kann. Hierzu wird der Druck im Kurbelgehäuse vorteilhaft vor und nach dem Überströmen von Verbrennungsluft in den Brennraum gemessen. Das Kurbelgehäuse ist bei der Druckmessung vorteilhaft zum Ansaugkanal und zum Brennraum geschlossen. Der Drucksensor ist bevorzugt ein kombinierter Druck-Temperatur-Sensor.

Das Verfahren zur Herstellung eines Arbeitsgeräts sieht vor, dass die Kurbelwelle ein Ausrichtungselement aufweist, und dass der polygonkegelförmige Abschnitt der Kurbelwelle derart geschliffen wird, dass der polygonkegelförmige Abschnitt in vordefinierter Weise zum Ausrichtungselement orientiert ist. Dadurch ist die Ausrichtung des Polygons bei der Herstellung des polygonkegelförmigen Abschnitts auf einfache Weise mit hoher Genauigkeit möglich.

Bei Einbringung des polygonkegelförmigen Abschnitts der Kurbelwelle in die polygonkegelförmige Aufnahme des Trägers ist in der Folge die Orientierung des Trägers zur Drehlage der Kurbelwelle genau vorgegeben. Je nach Gestaltung des Polygons ist möglicherweise noch eine Verdrehung des Trägers um die Drehachse um einen oder mehrere diskreten Winkel möglich. Dieser Winkel entspricht dem Winkel zwischen zwei Ecken des Polygons. Damit besteht innerhalb einer sehr geringen Toleranz ein genauer Zusammenhang zwischen der Winkellage des Trägers und der Orientierung der Kurbelwelle und der Lage des Kolbens im Zylinder.

Vorteilhaft ist vorgesehen, dass vor dem Schleifen des polygonkegelförmigen Abschnitts in die Kurbelwelle eine Ausrichtung der Kurbelwelle relativ zu einer Fertigungsanlage anhand geometrischer Merkmale der Kurbelwelle erfolgt. Dadurch kann der polygonkegelförmige Abschnitt der Kurbelwelle in vordefinierter Orientierung in die Kurbelwelle eingeschliffen werden. Auf diese Weise ist eine einfache Ausrichtung der Kurbelwelle relativ zu der Fertigungsanlage möglich.

Vorteilhaft ist vorgesehen, dass der Träger gegossen wird. Dadurch ist die Herstellung der polygonkegelförmigen Aufnahme des Trägers und des Trägers auf einfache und genaue Weise möglich. Der Träger besteht vorzugsweise aus Aluminium, Magnesium oder Kunststoff. Insbesondere kann der Träger aus Kunststoff mit einem Metalleinsatz bestehen. Der Träger kann jedoch auch aus anderen Leichtbaumaterialien bestehen.

Vorteilhaft ist vorgesehen, dass die polygonkegelförmige Aufnahme des Trägers beim Gießen des Trägers fertig hergestellt wird. Die Aufnahme des Trägers wird vorzugsweise nach dem Gießen nicht mehr nachbearbeitet. Dadurch kann die polygonkegelförmige Aufnahme des Trägers auf einfache Weise gleichzeitig mit der Herstellung des Trägers in einem Gießvorgang hergestellt werden. Die Aufnahme kann dadurch auch mit einem kleinen Durchmesser hergestellt werden. Eine Nachbearbeitung der polygonkegelförmigen Aufnahme des Trägers ist dabei nicht vorgesehen.

Vorteilhaft ist vorgesehen, dass der Träger in einer Gießform, die aus mehreren Gießformteilen zusammengesetzt ist, gegossen wird, dass am Träger Positioniermittel zur Positionierung eines Magnetrings auf dem Träger relativ zum polygonkegelförmigen Abschnitt vorgesehen sind, und dass die polygonkegelförmige Aufnahme des Trägers und die Positioniermittel von demselben Gießformteil geformt werden. Dadurch, dass die Positioniermittel und die polygonkegelförmige Aufnahme im gleichen Gießformteil geformt werden, kann bei der Fertigung des Trägers eine geringe Toleranz der relativen Lage von Positioniermittel und polygonkegelförmiger Aufnahme erreicht werden. Vorteilhaft sind die Signalgeber auf dem Magnetring fixiert. Durch die genaue Lage der Positioniermittel zum polygonkegelförmigen Abschnitt sind in der Folge auch der Magnetring und der auf ihm fixierte Signalgeber relativ zur polygonkegelförmigen Aufnahme auf dem Träger genau positioniert.

Die beschriebenen vorzugsweisen Ausführungsformen können in beliebiger Weise miteinander kombiniert werden. Beispielsweise wäre auch eine Ausführungsform eines Trägers aus Kunststoff mit mehreren Magneten denkbar.

Ausführungsbeispiele der Erfindung sind nachstehend anhand der Zeichnung näher erläutert. Es zeigen:
- Fig. 1: eine schematische, teilgeschnittene Seitenansicht einer Motorsäge,
- Fig. 2: eine schematische, perspektivische, teilgeschnittene Darstellung eines Verbrennungsmotors,
- Fig. 3: eine schematische Darstellung eines Schnitts durch eine Motorsäge,
- Fig. 4: eine Explosionsdarstellung von Kurbelwelle und Lüfterrad des Verbrennungsmotors,
- Fig. 5: eine Seitenansicht von Kurbelwelle und Lüfterrad aus Fig. 4 im zusammengebauten Zustand im unteren Totpunkt,
- Fig. 6: einen Schnitt entlang der Linie VI-VI in Fig. 5,
- Fig. 7: eine Seitenansicht des Lüfterrads in Richtung des Pfeils VII in Fig. 5,
- Fig. 8: eine Teildarstellung eines Schnitts entlang der Linie VIII-VIII in Fig. 6,
- Fig. 9: eine Teildarstellung eines Schnitts senkrecht zur Drehachse der Kurbelwelle, durch den polygonkegelförmigen Abschnitt der Kurbelwelle und entlang der Linie IX-IX in Fig. 8,
- Fig. 10: eine Seitenansicht auf die Kurbelwelle in Richtung des Pfeils VII in Fig. 5,
- Fig. 11: eine Teildarstellung einer Seitenansicht in Richtung des Pfeils XI in Fig. 10,
- Fig. 12: eine Explosionsdarstellung eines Lüfterrads mit Magnetring und mit Trägheitsring,
- Fig. 13: eine Seitenansicht des Verbrennungsmotors mit demontiertem Lüfterrad,
- Fig. 14: einen Schnitt entlang der Linie XIV-XIV in Fig. 13,
- Fig. 15: einen Schnitt senkrecht zur Drehachse der Kurbelwelle durch den Klauenpolgenerator, den Magnetring, das Lüfterrad und den polygonkegelförmigen Abschnitt der Kurbelwelle,
- Fig. 16: eine schematische Darstellung eines Schnitts durch eine Gießform, die ein fertig gegossenes Lüfterrad enthält,
- Fig. 17: die Schnittdarstellung aus Fig. 9 in vergrößerter Darstellung,
- Fig. 18: ein Ausführungsbeispiel einer Polygonkegelverbindung in einer Schnittdarstellung entsprechend zu Fig. 17.

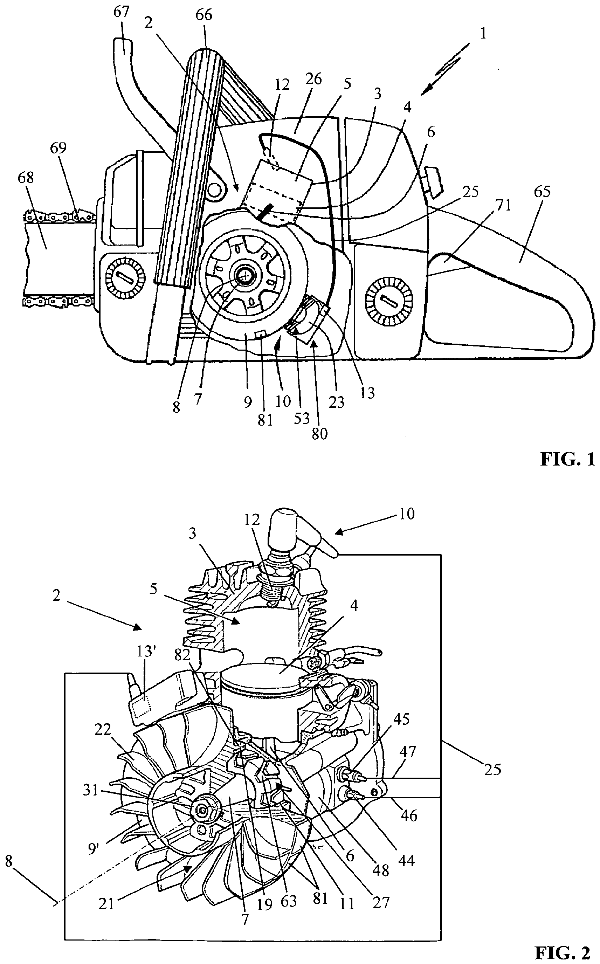

In Fig. 1 ist als Ausführungsbeispiel für ein handgeführtes Arbeitsgerät 1 eine Motorsäge gezeigt. Das Arbeitsgerät 1 könnte auch ein Trennschleifer, ein Blasgerät, ein Freischneider oder ein ähnliches tragbares, handgeführtes Arbeitsgerät sein.

Die Motorsäge besitzt ein Motorgehäuse 26, an dem eine Führungsschiene 68 festgelegt ist. An der Führungsschiene 68 ist eine Sägekette 69 umlaufend geführt. Im Motorgehäuse 26 ist ein Verbrennungsmotor 2 angeordnet, der die Sägekette 69 im Betrieb um die Führungsschiene 68 umlaufend antreibt. Im Ausführungsbeispiel ist der Verbrennungsmotor 2 als gemischgeschmierter Zweitaktmotor ausgebildet. Zum Führen der Motorsäge im Betrieb ist am Motorgehäuse 26 ein hinterer Handgriff 65 angeordnet, an dem ein Gashebel 71 schwenkbar gelagert ist. Über den Gashebel 71 ist der Verbrennungsmotor 2 zu bedienen.

Zum Führen der Motorsäge ist außerdem ein Griffrohr 66 vorgesehen, das das Motorgehäuse 26 der Motorsäge übergreift. Die Motorsäge besitzt einen Handschutz 67, der sich an der der Führungsschiene 68 zugewandten Seite des Griffrohrs 66 erstreckt. Der Handschutz 67 dient vorteilhaft zum Auslösen einer nicht gezeigten Bremseinrichtung für die Sägekette 69.

Der Verbrennungsmotor 2 weist einen Zylinder 3 mit einem darin auf und ab bewegten Kolben 4 auf, der über ein Pleuel 6 eine Kurbelwelle 7 antreibt. Die Kurbelwelle 7 dreht sich im Betrieb um eine Drehachse 8. Im Zylinder 3 ist ein Brennraum 5 ausgebildet, der vom Kolben 4 begrenzt ist. In den Brennraum 5 ragt eine Zündkerze 12. Die Zündkerze 12 dient zur Zündung eines im Brennraum 5 verdichteten Gemischs.

Mit der Kurbelwelle 7 läuft ein Träger um, der drehfest an der Kurbelwelle 7 fixiert ist. In den Ausführungsbeispielen ist der Träger als Lüfterrad 9 ausgebildet. Das Lüfterrad 9 dient zur Förderung von Kühlluft für den Verbrennungsmotor 2. Das Lüfterrad 9 dient vorzugsweise gleichzeitig als Schwungrad. Das Lüfterrad 9 besteht vorzugsweise aus Leichtmetall, insbesondere aus Magnesium oder Aluminium, oder aus Kunststoff. In den Ausführungsbeispielen sind alle Lüfterräder aus Magnesium. Wie in Fig. 1 dargestellt, ist am Umfang des Lüfterrads 9 zumindest ein Signalgeber angeordnet, der im Ausführungsbeispiel nach der Fig. 1 als Magnet 81 ausgebildet ist. Der Magnet 81 rotiert im Betrieb mit dem Lüfterrad 9 und wirkt mit einem Joch 23 eines ortsfest im Motorgehäuse 26 angeordneten Zündmoduls 80 zusammen. Die beiden offenen Enden des Jochs 23 sind von Spulen 53 umwickelt. Im Betrieb induziert der Magnet 81 eine Spannung in den Spulen 53 des Jochs 23 und erzeugt damit ein elektrisches Signal. Das Zündmodul 80 umfasst eine Steuereinrichtung 13, die den Zündzeitpunkt, zu dem ein Zündfunke im Brennraum 5 ausgelöst werden soll, ermittelt. Als Zündzeitpunkt ist dabei die Winkelstellung der Kurbelwelle 7 bezeichnet, zu der die Zündung des Gemischs im Brennraum erfolgen soll. Das Zündmodul 80 ist über ein Zündkabel 25 mit der Zündkerze 12 verbunden. Der Magnet 81, das Joch 23, die Spulen 53, das Zündkabel 25 und die Zündkerze 12 sind Teil einer Zündeinrichtung 10. Die Steuereinrichtung 13 löst in Abhängigkeit der Drehlage der Kurbelwelle 7 und damit in Abhängigkeit der Hublage des Kolbens 4 den Zündfunken zur Verbrennung eines in den Brennraum 5 angesaugten Kraftstoff/Luft-Gemischs aus. Die Ermittlung der Drehlage der Kurbelwelle 7 erfolgt unter Nutzung des von dem mindestens einen Magneten 81 in den Spulen 53 erzeugten Signals. Das Signal wird dabei vorteilhaft genutzt, um die Orientierung des Lüfterrads 9 an der Kurbelwelle 7, also die Ausrichtung der polygonkegelförmigen Abschnitte zueinander, zu ermitteln. Die genaue Winkellage des Lüfterrads 9 an der Kurbelwelle 7 ist vorteilhaft aufgrund der konstruktiven Gestaltung vorgegeben und in der Steuereinrichtung 1 hinterlegt. Es kann auch vorgesehen sein, dass der Zeitpunkt der Zündung direkt durch die beim Durchgang eines Magneten durch das Joch in den Spulen induzierte Spannung bestimmt ist. Eine derartige ausgelöste Zündung wird als Magnetzündung bezeichnet. Bei der Magnetzündung wird üblicherweise die zur Bildung des Zündfunkens erforderliche Zündspannung durch die Induktion einer Spannung in einer Spule mittels eines oder mehrerer Dauermagneten erzeugt. Die induzierte Spannung wird in einem Kondensator zwischengespeichert. Das vom Signalgeber erzeugte Signal kann dann zur Auslösung des Zündfunkens genutzt werden. Der Dauermagnet bzw. die Dauermagnete sind vorzugsweise in den umlaufenden Rand des Trägers eingegossen.

Die Steuereinrichtung 13 ermittelt den Wert für den Zündzeitpunkt anhand von Betriebsparametern wie der Drehzahl sowie anhand der der Steuereinrichtung 13 zugeführten Messwerte, wie beispielsweise der Messwerte für die Temperatur und den Druck in einem Kurbelgehäuse 48 (Fig. 2).

Die Fig. 2 zeigt den Verbrennungsmotor 2 aus dem Arbeitsgerät 1 nach der Fig. 1, wobei anstatt des Lüfterrads 9 ein Lüfterrad 9' vorgesehen ist. Am Lüfterrad 9' sind auf der dem Zylinder 3 abgewandten Seite 21 Luftleitelemente 22 angeordnet. Das Lüfterrad 9' weist auf seiner dem Zylinder 3 zugewandten Seite eine Aufnahme 82 für einen Magnetring 19 auf. Ein Querschnitt durch den Magnetring 19 senkrecht zur Drehachse 8 ist kreisförmig. Das Zentrum des kreisförmigen Querschnitts des Magnetrings 19 liegt auf der Drehachse 8. Der Magnetring 19 ist an der der Drehachse 8 zugewandten, innenliegenden Umfangsseite der Aufnahme 82 angeordnet. An dem Magnetring 19 sind in regelmäßigen Abständen zueinander mehrere Magnete 11 angeordnet. Der Magnetring 19 dient im Ausführungsbeispiel damit als Befestigungsring für die Magnete 11. Die Magnete 11 sind Teil eines als Klauenpolgenerator 27 ausgebildeten Generators. Klauen des Klauenpolgenerators 27 umschließen ortsfest am Kurbelgehäuse 48 angeordnete Spulen 63, in denen bei einer Drehbewegung des Magnetrings 19 und der Magnete 11 um die Drehachse 8 eine Spannung induziert und dadurch ein Signal erzeugt wird.

Die Magnete 81 am Außenumfang des Lüfterrads 9' dienen in diesem Ausführungsbeispiel, wie auch beim Lüfterrad 9 im Ausführungsbeispiel gemäß Fig. 1, dazu, über magnetische Induktion die zur Zündung benötigte Energie zu erzeugen.

Wie Fig. 2 zeigt, sind am Kurbelgehäuse 48 ein Drucksensor 44 und ein Temperatursensor 45 angeordnet, die den Druck und die Temperatur im Kurbelgehäuse 48 messen. Der Drucksensor 44 ist über ein Kabel 46 mit einer Steuereinrichtung 13' verbunden. Die Steuereinrichtung 13' ersetzt in diesem Ausführungsbeispiel die Steuereinrichtung 13 des Ausführungsbeispiels gemäß Fig. 1. Der Temperatursensor 45 ist über ein Kabel 47 mit der Steuereinrichtung 13' verbunden.

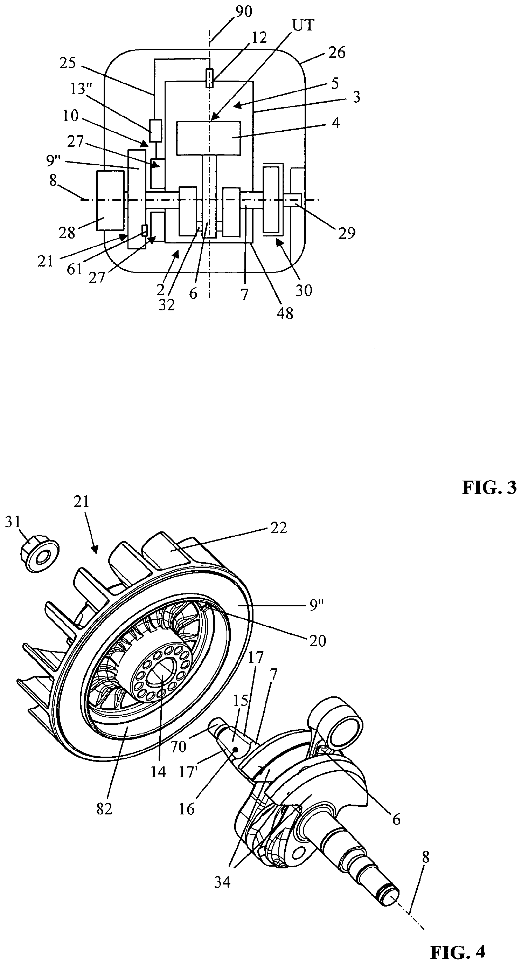

Fig. 3 zeigt in schematischer Darstellung einen Schnitt durch die Motorsäge nach Fig. 1, wobei anstatt des Lüfterrads 9 ein Lüfterrad 9" und anstatt der Steuereinrichtung 13 eine Steuereinrichtung 13" vorgesehen sind. Die Schnittebene wird von der Drehachse 8 der Kurbelwelle 7 und der senkrecht zur Drehachse 8 orientierten Zylinderlängsachse 90 aufgespannt. In Fig. 3 befindet sich die Kurbelwelle 7 in ihrem unteren Totpunkt UT. Die Kurbelwelle 7 umfasst einen Hubzapfen 32. Sowohl der Kolben 4 als auch der Hubzapfen 32 besitzen im unteren Totpunkt UT ihren maximalen Abstand von der Zündkerze 12.

Wie Fig. 3 zeigt, besitzt das Arbeitsgerät 1 zum Anwerfen des Verbrennungsmotors 2 eine Anwerfvorrichtung 28, die beispielsweise ein Seilzugstarter oder eine elektrisch angetriebene Anwerfvorrichtung sein kann. Die vom Verbrennungsmotor 2 erzeugte Rotationsbewegung der Kurbelwelle 7 wird, wie in Fig. 3 gezeigt, über eine Fliehkraftkupplung 30 auf ein Antriebsritzel 29 übertragen und im Ausführungsbeispiel zum Antrieb der in Fig. 1 gezeigten Sägekette genutzt.

Der Klauenpolgenerator 27 ist Teil der Zündeinrichtung 10 und wird zur Erzeugung der für die Zündung der Zündkerze 12 benötigten Spannung genutzt. Der Klauenpolgenerator 27 ist elektrisch leitend mit einer Steuereinrichtung 13" verbunden. Das von den Magneten 61 erzeugte Signal wird verwendet, um die Zündkerze 12 zu einem in der Steuereinrichtung 13" ermittelten, vorgegebenen Zündzeitpunkt zu zünden.

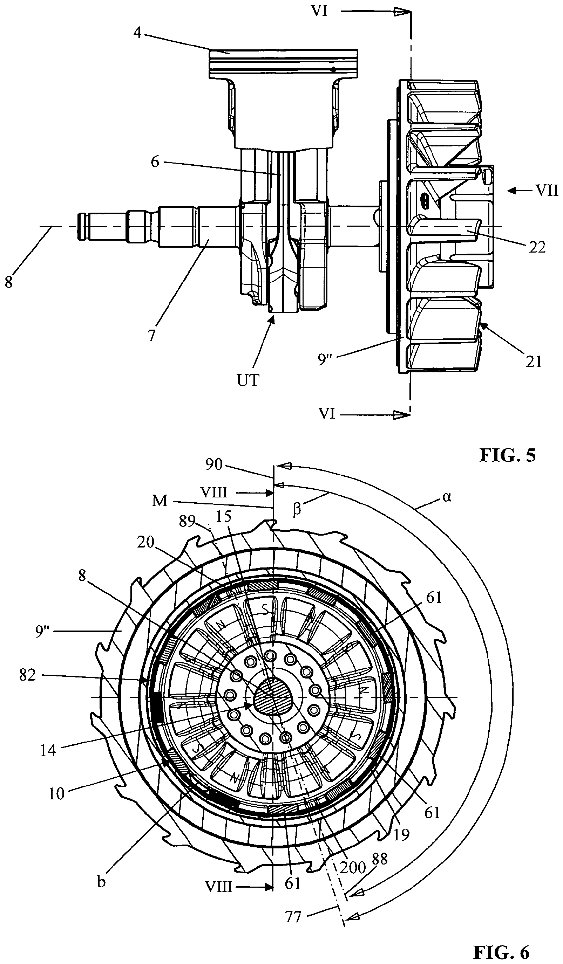

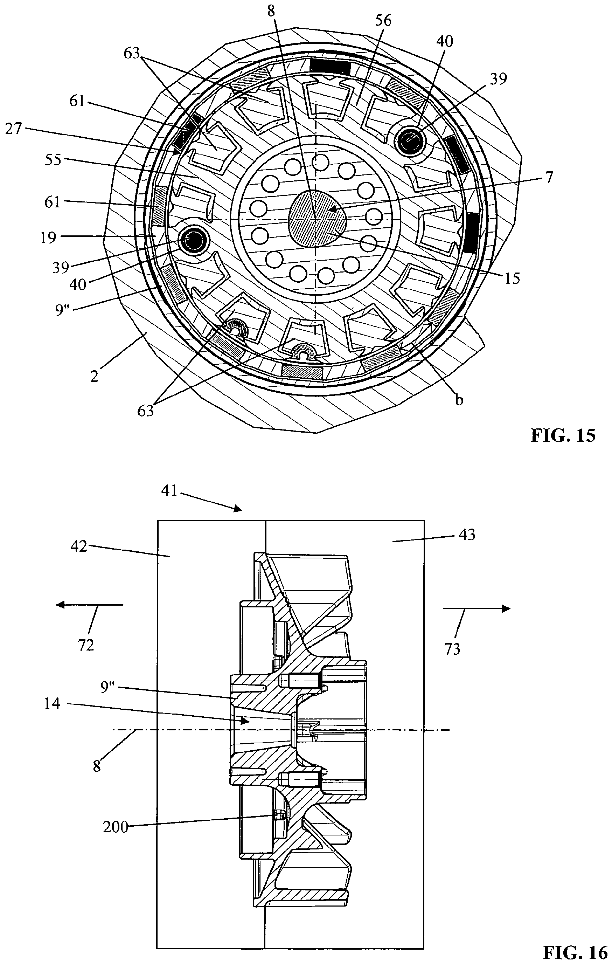

An der dem Zylinder 3 zugewandten Seite des Lüfterrads 9" ist der in Fig. 3 nicht gezeigte Magnetring 19 angeordnet. Wie in den Fig. 6 und 15 gezeigt, sind auf dem Magnetring 19 zwölf Magnete 61 kreisförmig um die Drehachse 8 angeordnet. In Umfangsrichtung benachbarte Magnete 61 besitzen jeweils den gleichen, in Umfangsrichtung um die Drehachse 8 gemessenen Abstand b zueinander.

Beim Ausführungsbeispiel nach Fig. 3 ist der Signalgeber gleichzeitig auch Teil eines Rotors des Klauenpolgenerators 27. Der Signalgeber wird im Ausführungsbeispiel nach der Fig. 3 von den zwölf Magneten 61 gemeinsam gebildet. Die Magnete 61 erzeugen ein sinusförmiges Signal. Das vom Signalgeber erzeugte Signal wird in der in Fig. 3 gezeigten Steuereinrichtung 13" dazu verwendet, die Zündkerze 12 zu einem in der Steuereinrichtung 13" ermittelten, vorgegebenen Zündzeitpunkt zu zünden. Während einer Umdrehung des Lüfterrads 61 wird vom Signalgeber ein sinusförmiges Signal mit zwölf Sinusperioden erzeugt. Die Steuereinrichtung 13" ermittelt beispielsweise diejenige der zwölf Sinusperioden des Signals, die dann erzeugt wird, wenn sich der Kolben 4 und der Hubzapfen 32 im unteren Totpunkt UT befinden. Diese Sinusperiode des vom Signalgeber erzeugten Signals wird im Folgenden als UT-Sinusperiode bezeichnet. Zur Ermittlung des Zeitpunkts der Zündung kann aber auch jede andere Sinusperiode genutzt werden. Um die UT-Sinusperiode zu identifizieren, werden der Steuereinrichtung 13" beispielsweise die Messsignale des in Fig. 2 gezeigten Drucksensors 44, mit dem der Kurbelgehäusedruck gemessen wird, zugeführt. Der Kurbelgehäusedruck ändert sich in Abhängigkeit der Winkelstellung der Kurbelwelle 7 in Bezug auf die Drehachse 8 der Kurbelwelle 7, also in Abhängigkeit des Kurbelwellenwinkels. Wenn sich der Kurbelwellenwinkel der Kurbelwelle 7 im Bereich um die Winkelposition des unteren Totpunkts UT herum befindet, nimmt der Kurbelgehäusedruck im Betrieb seinen höchsten Wert an. Typischerweise geschieht dies einige Winkelgrade bevor der untere Totpunkt UT erreicht wird.

Für die genaue Ermittlung des unteren Totpunkts UT weisen die in Fig. 6 gezeigte tatsächliche Winkelposition der einzelnen Magnete 61 im unteren Totpunkt UT und die in der Steuereinrichtung 13" hinterlegte Sollwinkelposition der Magnete 61 eine möglichst kleine Abweichung voneinander auf. Die Relativposition des Hubzapfens 34 (Fig. 3) und der Magnete 61 muss hinreichend genau festgelegt sein. Bei der Bestimmung des Zeitpunkts, zu dem die Zündkerze 12 gezündet wird, in einer der Steuereinrichtungen 13, 13' und 13" kommt es auf die genaue Relativposition der Magnete 11, 61 oder 81 zur Kurbelwelle 7 an. Hierzu ist, wie in Fig. 4 dargestellt, eine Polygonkegelverbindung zwischen der Kurbelwelle 7 und dem Lüfterrad 9" vorgesehen. Die Kurbelwelle 7 weist an ihrem dem Lüfterrad 9" zugewandten Ende einen polygonkegelförmigen Abschnitt 15 auf. Die Lüfterräder 9 und 9' nach den Fig. 1 und 2 sind entsprechend gestaltet. Die Polygonkegelverbindung zwischen Lüfterrad 9" und Kurbelwelle 7 ermöglicht im Ausführungsbeispiel nach Fig. 4 genau drei relative Drehlagen von Träger und Kurbelwelle 7. Ist die UT-Sinusperiode identifiziert, so kann die Drehlage von Träger und Kurbelwelle 7 genau ermittelt werden. Dadurch ist es möglich, die Zündung von Gemisch im Brennraum 5 vergleichsweise genau zu dem in der Steuereinrichtung 13" ermittelten Zündzeitpunkt auszulösen. Dies gilt entsprechend für die Steuereinrichtungen 13 und 13' nach den Fig. 1 und 2.

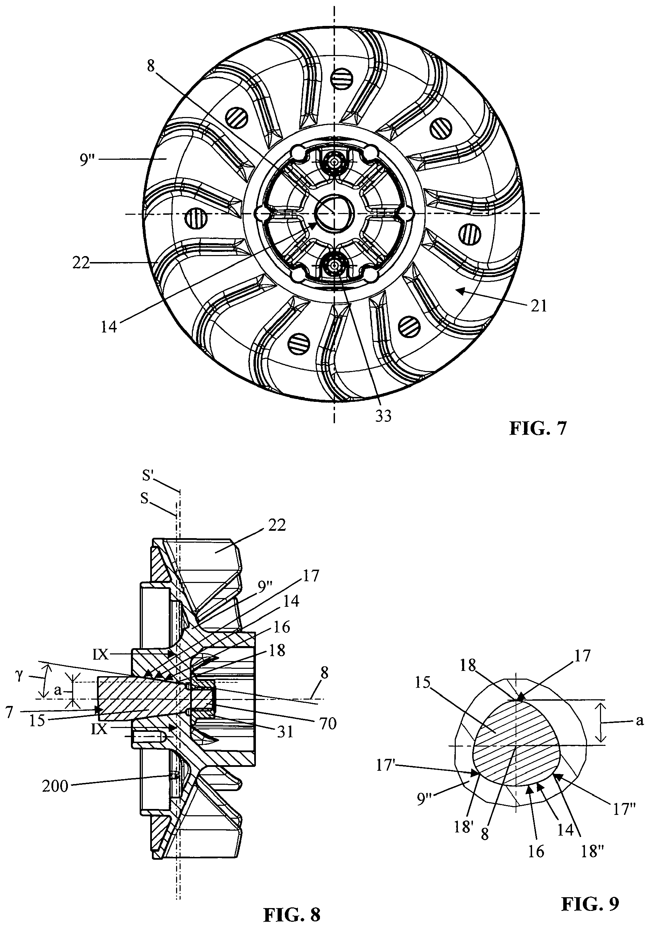

In Fig. 9 ist ein Querschnitt des polygonkegelförmigen Abschnitts 15 senkrecht zur Drehachse 8 der Kurbelwelle 7 dargestellt. Das in diesem Querschnitt dargestellte Polygon ist ein P3G-Polygon. Das P3G-Polygon wird als Gleichdick-Profil bezeichnet, weil alle senkrecht zur Längsachse 8 durch die Längsachse 8 verlaufenden Durchmesser des Profils, bzw. des Querschnitts des polygonkegelförmigen Abschnitts 15, gleich lang sind. Wie in den Fig. 4 und 9 zu erkennen, weist der polygonkegelförmige Abschnitt 15 der Kurbelwelle 7 genau drei Seitenlinien 17, 17', 17" auf, die sich im Wesentlichen in Richtung der Drehachse 8 erstrecken.

In Fig. 8 sind beispielhaft Schnittebenen S, S' gezeigt. Die Schnittebenen S, S' verlaufen senkrecht zur Drehachse 8 und schneiden den polygonkegelförmigen Abschnitt 15. Jede Schnittebene S, S' schneidet die drei Seitenlinien 17, 17', 17" (Fig. 9). Die Schnittpunkte der Seitenlinien 17, 17', 17" mit einer der Schnittebenen S, S' kennzeichnen Punkte 18, 18', 18" der Mantelfläche 16 des polygonkegelförmigen Abschnitts 15, die in dieser Schnittebene S, S' einen größten Abstand a von der Drehachse 8 aufweisen. Wie in Fig. 4 dargestellt, verkleinert sich der Querschnitt des polygonkegelförmigen Abschnitts 15 senkrecht zur Drehachse 8 in Richtung weg von Kurbelwangen 34 der Kurbelwelle 7. Die drei in einer Mantelfläche 16 des polygonkegelförmigen Abschnitts 15 verlaufenden Seitenlinien 17, 17', 17" laufen in Richtung der Längsachse 8 in Richtung weg von den Kurbelwangen 34 aufeinander zu.

Auf der den Kurbelwangen 34 abgewandten Seite des polygonkegelförmigen Abschnitts 15 weist die Kurbelwelle 7 an ihrem Ende einen Gewindezapfen 70 auf. Die Längssymmetrieachse des Gewindezapfens 70 liegt koaxial zur Drehachse 8. Der Durchmesser des Gewindezapfens 70 ist kleiner als die senkrecht zur Längsachse 8 durch die Längsachse 8 verlaufenden Durchmesser des Profils, bzw. des Querschnitts des polygonkegelförmigen Abschnitts 15.

Fig. 4 zeigt neben der Kurbelwelle 7 einen als Lüfterrad 9" ausgebildeten Träger, der sich im Betrieb um die Drehachse 8 dreht. Im Bereich der Drehachse 8 ist eine polygonkegelförmige Aufnahme 14 im Lüfterrad 9" angeordnet. Die polygonkegelförmige Aufnahme 14 erstreckt sich in Richtung der Drehachse 8 der Kurbelwelle 7. Die polygonkegelförmige Aufnahme 14 bildet eine durchgehende Öffnung durch das Lüfterrad 9". Die polygonkegelförmige Aufnahme 14 des Lüfterrads 9" korrespondiert mit dem polygonkegelförmigen Abschnitt 15. Die Außenkontur des polygonkegelförmigen Abschnitts 15 besitzt in einem Querschnitt senkrecht zur Drehachse 8 durch die polygonkegelförmige Aufnahme 15 die Form eines P3G-Polygons. Der Querschnitt der polygonkegelförmigen Aufnahme 14 verkleinert sich in Richtung der Drehachse 8 in Richtung weg vom Zylinder 3. Im zusammengebauten Zustand ist die Kurbelwelle 7 über ihren polygonkegelförmigen Abschnitt 15 formschlüssig mit dem Lüfterrad 9" über dessen polygonkegelförmige Aufnahme 14 verbunden. Hierbei ist der polygonkegelförmige Abschnitt 15 der Kurbelwelle 7 durch die polygonkegelförmige Aufnahme des Lüfterrads 9" gesteckt. Der Gewindezapfen 70 der Kurbelwelle 7 ragt aus der dem Zylinder 3 abgewandten Seite 21 des Lüfterrads 9" heraus. Auf das Außengewinde des Gewindezapfens 70 ist eine Fixiermutter 31 aufgeschraubt. Mittels der Fixiermutter 31 ist der polygonkegelförmige Abschnitt 15 der Kurbelwelle 7 in die polygonkegelförmige Aufnahme 14 des Lüfterrads 9" gepresst.

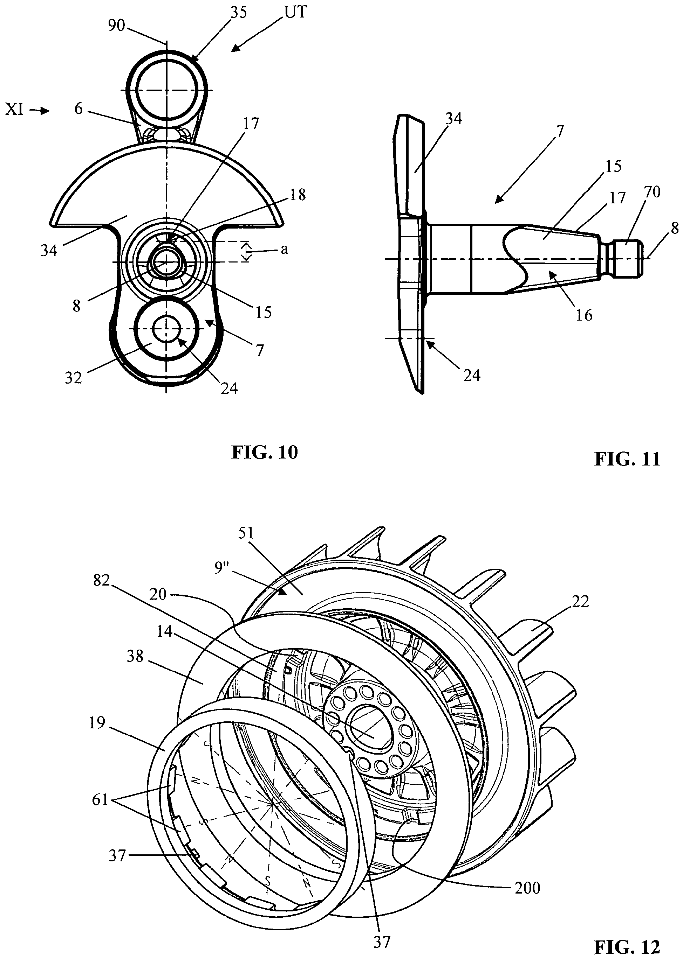

Fig. 4 zeigt weiterhin die auf der dem Zylinder 3 zugewandten Seite des Lüfterrads 9" angeordnete Aufnahme 82. In die Aufnahme 82 ist der Magnetring 19 eingebracht, der in Fig. 4 nicht gezeigt ist. Zur Positionierung des Magnetrings 19 sind im Ausführungsbeispiel, wie auch in Fig. 12 dargestellt, in der Aufnahme 82 ein erstes Positioniermittel 200 und ein zweites Positioniermittel 20 vorgesehen. Die Positioniermittel 20, 200 sind im Ausführungsbeispiel als in den Boden der Aufnahme 82 eingebrachte Vertiefungen ausgebildet. Die Vertiefungen im Boden der Aufnahme 82 des Lüfterrads 9" korrespondieren mit in Fig. 12 dargestellten Positioniermitteln 37 des Magnetrings 19. Die Positioniermittel 37 des Magnetrings 19 sind über den Rand des Magnetrings 19 vorstehende Nasen, die sich in Richtung der Drehachse 8 der Kurbelwelle 7 in Richtung weg vom Zylinder 3 erstrecken. Durch das Zusammenspiel der Positioniermittel 20, 200 des Lüfterrads 9" und der Positioniermittel 37 des Magnetrings 19 ist die Lage des Magnetrings 19 auf dem Lüfterrad 9" eindeutig bestimmt.

Die Polygonverbindung nach der Fig. 4 ist für alle gezeigten Ausführungsbeispiele vorgesehen, auch wenn dieses Detail nicht für alle gezeigten Lüfterräder dargestellt ist. Auch die Lüfterräder 9 und 9' weisen polygonkegelförmige Aufnahmen 14 nach der Fig. 4 auf. Ebenso weist das Lüfterrad 9' Aufnahmen 82 und Positioniermittel 20, 200 auf, auch wenn dies für das Lüfterrad 9' in der Zeichnung nicht gezeigt ist.

Fig. 5 zeigt das Lüfterrad 9" und die Kurbelwelle 7 in zusammengebautem Zustand in einer Seitenansicht. Der Kolben 4, das Pleuel 6 und die Kurbelwelle 7 befinden sich in der gezeigten Ansicht im unteren Totpunkt UT. Der zwischen der Kurbelwange 34 und dem Lüfterrad 9" angeordnete Stator des Klauenpolgenerators 27 ist in den Fig. 5 bis 8 nicht gezeigt.

Fig. 6 zeigt einen Schnitt entlang der Linie VI-VI in Fig. 5. Die Schnittebene ist senkrecht zur Drehachse 8 der Kurbelwelle 7 orientiert und schneidet sowohl das Lüfterrad 9" als auch den Magnetring 19 mit dem auf dem Magnetring 19 fixierten Magneten 11. Der Querschnitt des Magnetrings 19 ist in der gezeigten Schnittebene kreisförmig. Das Zentrum des kreisförmigen Querschnitts des Magnetrings 19 liegt auf der Drehachse 8 der Kurbelwelle 7. An der der Drehachse 8 zugewandten Innenseite des Magnetrings 19 sind die zwölf Magnete 61 angeordnet. Die Magnete 61 sind Permanentmagnete. In Bezug auf die Umfangsrichtung um die Drehachse 8 sind die Magnetfeldlinien von in Umfangsrichtung benachbarten Magneten 61 zumindest teilweise gegenläufig orientiert. Die Magnete 61 sind Teil des Rotors des in Fig. 6 nicht in seiner Gesamtheit gezeigten Klauenpolgenerators 27.

Die Lage der Magnete 61 relativ zum Lüfterrad 9" ist durch ihre Anordnung am Magnetring 19 und durch die Anordnung des Magnetrings 19 am Lüfterrad 9" festgelegt. Die Lage des Magnetrings 19 relativ zum Lüfterrad 9" ist durch das Zusammenspiel der Positioniermittel 37 (Fig. 12) des Magnetrings 19 und der Positioniermittel 20, 200 der Aufnahme 82 des Lüfterrads 9" festgelegt. Die Positioniermittel 37 sind vorteilhaft als Nasen ausgebildet und die Positioniermittel 20, 200 sind als Vertiefungen ausgebildet. Die Nasen greifen formschlüssig in die Vertiefungen ein. Im Ausführungsbeispiel nach Fig. 6 sind als Positioniermittel 20, 200 zwei sich in Bezug auf die Drehachse 8 diametral gegenüberliegende Vertiefungen vorgesehen. Im unteren Totpunkt UT liegt das erste Positioniermittel 200 unterhalb der Drehachse 8, und ist von der Zündkerze 12 (Fig. 3) weiter entfernt als das zweite Positioniermittel 20.

Das erste Positioniermittel 200 besitzt eine radial zur Drehachse 8 verlaufende Symmetrieachse 89. Die Lage der Symmetrieachse 89 markiert eine tatsächliche Position 88 des durch die Magnete 61 gebildeten Signalgebers. Der Signalgeber wird im Ausführungsbeispiel nach der Fig. 6 von den zwölf Magneten 61 gemeinsam gebildet. Die tatsächliche Position 88 ist eine Drehlage des Positioniermittels 200 um die Drehachse 8 und wird in der Figur durch eine strichpunktierte radial zur Drehachse verlaufende Linie verdeutlicht. Die Winkelposition wird gegenüber dem Punkt angegeben, an dem sich das erste Positioniermittel 200 in einer von der Zylinderlängsachse 90 und der Drehachse 8 aufgespannten Ebene, und zwar oberhalb der Drehachse 8, also näher zur Zündkerze 12, befindet. Dies entspricht in der in Fig. 6 gezeigten Lage der obersten Position des ersten Positioniermittels 200, also einer Lage des ersten Positioniermittels 200 in seinem oberen Totpunkt. In diesem Punkt beträgt die Winkelposition der Symmetrieachse 0°. Im unteren Totpunkt UT (Fig. 3, 5 und 10) des Kolbens 4 wird die Winkelposition der Symmetrieachse, also die tatsächliche Position 88 des Signalgebers, mit einem Winkel β gegenüber der oberen Totpunktlage angegeben. Im Ausführungsbeispiel nach der Fig. 6 beträgt der Winkel β ungefähr 160°.

In der Steuereinrichtung 13, 13', 13" nach den Fig. 1 bis 3 ist ein Winkel α für eine Sollposition 77 des Signalgebers bei Vorliegen einer vorgegebenen Position des Kolbens 4 im Zylinder 3 hinterlegt. Im Ausführungsbeispiel nach der Fig. 6 beträgt der Winkel α für den unteren Totpunkt UT des Kolbens 4 genau 160°. Die Sollposition 77 des Signalgebers ist die gewünschte Winkelposition des Signalgebers bei der vorgegebenen Position des Kolbens 4 im Zylinder 3. In den Ausführungsbeispielen ist die vorgegebene Position des Kolbens 4 im Zylinder 3 der in den Fig. 3, 5 und 10 dargestellte untere Totpunkt UT.

In Fig. 6 ist der Winkelabstand zwischen der tatsächlichen Position 88 des Signalgebers und der Sollposition 77 des Signalgebers, also die Differenz zwischen dem Winkel β und dem Winkel α, übertrieben dargestellt. Tatsächlich beträgt die Differenz zwischen dem Wert β und dem Wert α weniger als 2,5°, im Ausführungsbeispiel weniger als 2°. Die Abweichung zwischen der Sollposition 77 und der tatsächlichen Position 88 entspricht der Toleranz, die bei der Positionierung des Signalgebers gegenüber dem Lüfterrad 9" eingehalten werden muss. Aus dem im Betrieb vom Signalgeber erzeugten Sinussignal kann nach der Identifizierung der UT-Sinusperiode aus dem Verlauf des Sinussignals in der UT-Sinusperiode darauf geschlossen werden, wann sich der Signalgeber in seiner Sollposition 77 befindet. Aufgrund der geringen Abweichung der tatsächlichen Position 88 von der Sollposition 77 im unteren Totpunkt UT kann der Zeitpunkt, zu dem sich die Kurbelwelle 7 und damit der Kolben 4 (Fig. 3) im unteren Totpunkt UT befindet, mit einer sehr kleinen Ungenauigkeit durch die Steuereinrichtung 13" detektiert werden. Aufgrund dieser genauen Information kann in der Steuereinrichtung 13" die Zündkerze 12 vergleichsweise exakt zu dem in der Steuereinrichtung 13" ermittelten, vorgegebenen Zündzeitpunkt zünden.

Die genaue Lagebestimmung des Kolbens 4 über das vom Signalgeber erzeugte Signal kann zur Detektion einer beliebigen vorgegebenen Position des Kolbens 4 im Zylinder 3 genutzt werden. Es kann beispielsweise auch vorgesehen sein, dass der in Fig. 2 gezeigte Drucksensor 44 den Druck im Kurbelgehäuse 48 zu einem bestimmten Zeitpunkt misst, in dem sich der Kolben 4 in einer bestimmten Position befindet. Die Bestimmung dieses Zeitpunkts kann anhand des Signals in der Steuereinrichtung 13" vorgenommen werden. Auf diese Weise ist beispielsweise die Bestimmung des Luftmassemassenstroms vom Kurbelgehäuse 48 in den Brennraum 5 möglich. Hierzu wird der Druck im Kurbelgehäuse 48 zu zwei Zeitpunkten, insbesondere vor und nach dem Überströmen von Verbrennungsluft in den Brennraum 5 gemessen, wobei das Kurbelgehäuse 48 bei der Druckmessung zum Ansaugkanal und zum Brennraum 5 geschlossen ist. Da die Stellung des Kolbens 4 in den beiden Zeitpunkten bekannt ist, ist auch das Volumen des Kurbelgehäuses 48 in den beiden Zeitpunkten bekannt. Mittels der idealen Gasgleichung kann aus den gemessenen Drücken und den Volumina des Kurbelgehäuses 48 die zwischen den zwei Zeitpunkten vom Kurbelgehäuse 48 in den Brennraum 5 übergeströmte Luftmasse ermittelt werden.

Fig. 7 zeigt eine Draufsicht auf das Lüfterrad 9" aus den Fig. 4 bis 6 in Richtung der Drehachse 8 der Kurbelwelle 7 aus Richtung der dem Zylinder 3 abgewandten Seite 21 des Lüfterrads 9", wobei in Fig. 7 ausschließlich das Lüfterrad 9" gezeigt ist. Die Kurbelwelle 7 ist in Fig. 7 nicht dargestellt. An der dem Zylinder 3 abgewandten Seite 21 des Lüfterrads 9" sind Luftleitelemente 22 angeordnet. Die Luftleitelemente 22 sind in Form von Schaufelrädern um die Drehachse 8 herum angeordnet. Die polygonkegelförmige Aufnahme 14 des Lüfterrads 9" weist auf der Seite 21 des Lüfterrads 9" ihren kleinsten Querschnitt senkrecht zur Drehachse 8 auf. Ausgehend von der Seite 21 des Lüfterrads 9" sind vorteilhaft sich in Richtung der Drehachse 8 erstreckende Gewindebohrungen 33 in das Lüfterrad 9" eingebracht. Zur Demontage des Lüfterrads 9" werden in die Gewindebohrungen 9" Gewindebolzen eingeschraubt. Mittels der Gewindebolzen lässt sich das Lüfterrad 9" leicht demontieren.

Fig. 8 zeigt einen Schnitt durch das Lüfterrad 9" und den polygonkegelförmigen Abschnitt 15 sowie den Gewindezapfen 70 der Kurbelwelle 7. Der Stator des Klauenpolgenerators 27 ist in Fig. 8 nicht gezeigt. Die Zylinderlängsachse 90 und die Drehachse 8 spannen eine Ebene M (Fig. 6) auf, die gleichzeitig die Schnittebene ist. Wie in Fig. 8 gezeigt, ist die Mantelfläche 16 des polygonkegelförmigen Abschnitts 15 der Kurbelwelle 7 in der Ebene M in einem Winkel γ von 6° bis 12°, insbesondere von 8,5° bis 10° zur Drehachse 8 orientiert. Die Mantelfläche 16 ist vorteilhaft auch in jeder anderen beliebigen Ebene, die die Drehachse 8 enthält, in einem Winkel γ von 6° bis 12°, insbesondere von 8,5° bis 10° zur Drehachse 8 orientiert.

In der in Fig. 8 gezeigten Darstellung befindet sich die Kurbelwelle 7 in ihrem unteren Totpunkt UT (Fig. 5). Im unteren Totpunkt UT liegt die Seitenlinie 17 der drei Seitenlinien 17, 17', 17" des polygonkegelförmigen Abschnitts 15, auf denen Punkte 18, 18', 18" liegen, die in Schnittebenen S, S' (Fig. 8) senkrecht zur Drehachse 8 den größten Abstand a von der Drehachse 8 aufweisen, in der Ebene M. Auf der Seitenlinie 17 liegt der Punkt 18. Die in Fig. 8 sichtbare Seitenlinie 17 liegt im unteren Totpunkt UT oberhalb der Drehachse 8, also von den drei Seitenlinien 17, 17', 17" des polygonkegelförmigen Abschnitts 15 der Zündkerze 12 am nächsten.

Fig. 9 zeigt einen Querschnitt des polygonkegelförmigen Abschnitts 15 der Kurbelwelle 7. Die zugehörige Schnittebene S verläuft senkrecht zur Drehachse 8 und ist in Fig. 8 gezeigt. In Fig. 9 sind drei Punkte 18, 18', 18" gezeigt, die alle denselben, größten Abstand a zur Drehachse 8 aufweisen. Die drei Punkte 18, 18', 18" sind jeweils Teil von drei verschiedenen Seitenlinien 17, 17', 17" des polygonkegelförmigen Abschnitts 15. Wie in Fig. 8 und 9 gezeigt, ist der polygonkegelförmige Abschnitt 15 der Kurbelwelle 7 formschlüssig von der polygonkegelförmigen Aufnahme 14 des Lüfterrads 9" umschlossen.

Fig. 10 zeigt eine Draufsicht auf die Kurbelwelle 7 und das zwischen den Kurbelwangen 34 angeordnete Pleuel 6. Die Kurbelwelle 7 befindet sich im unteren Totpunkt UT. Die Kurbelwange 34 ist mit dem Hubzapfen 32 verbunden. Der polygonkegelförmige Abschnitt 15 der Kurbelwelle 7 wird derart geschliffen, dass der polygonkegelförmige Abschnitt 15 in vordefinierter Weise zum Ausrichtungselement 24 orientiert ist. Als Ausrichtungselement 24 für den polygonkegelförmigen Abschnitt 15 kann hierbei beispielsweise der Hubzapfen 32 oder die Hubzapfenbohrung dienen. Die Seitenlinie 17 des polygonkegelförmigen Abschnitts 15 zeigt auf den Hubzapfen 32. Als Ausrichtungselement 24 kann auch ein anderer Bereich der Kurbelwelle 7 dienen.

Fig. 11 zeigt eine Seitenansicht eines Teils der Kurbelwelle 7, wobei nur eine der beiden Kurbelwangen 34 dargestellt ist.

Fig. 12 zeigt eine Explosionsdarstellung des Lüfterrads 9", des Magnetrings 19 und eines Trägheitsrings 38. Die Dichte des Materials des Trägheitsrings 38 ist größer als die Dichte des Materials des Lüfterrads 9". Durch die Verwendung des Trägheitsrings 38 ist die Massenverteilung des Systems aus Lüfterrad 9" und Trägheitsring 38 besonders günstig. Durch den Trägheitsring 38 ist es möglich, eine große Masse entfernt von der Drehachse 8 am Lüfterrad 9" zu befestigen. Dadurch ergibt sich ein großes Trägheitsmoment bei gleichzeitig kleinem Gewicht des Systems aus Lüfterrad 9" und Trägheitsring 38. Aufgrund des vergleichsweise hohen Trägheitsmoments kann das System aus Lüfterrad 9" und Trägheitsring 38 als Schwungrad genutzt werden.

Im zusammengebauten Zustand ist der Trägheitsring 38 auf der dem Zylinder 3 zugewandten Seite des Lüfterrads 9" angeordnet. Der Innendurchmesser des Trägheitsrings 38 ist größer als der Außendurchmesser des Magnetrings 19. Der Magnetring 19 ist im Zentrum des Trägheitsrings 38 angeordnet und wird vom Trägheitsring 38 umschlossen. Der Magnetring 38 ist vorzugsweise in einer kreisringförmigen Aufnahme 51 des Lüfterrads 9" eingeklebt.

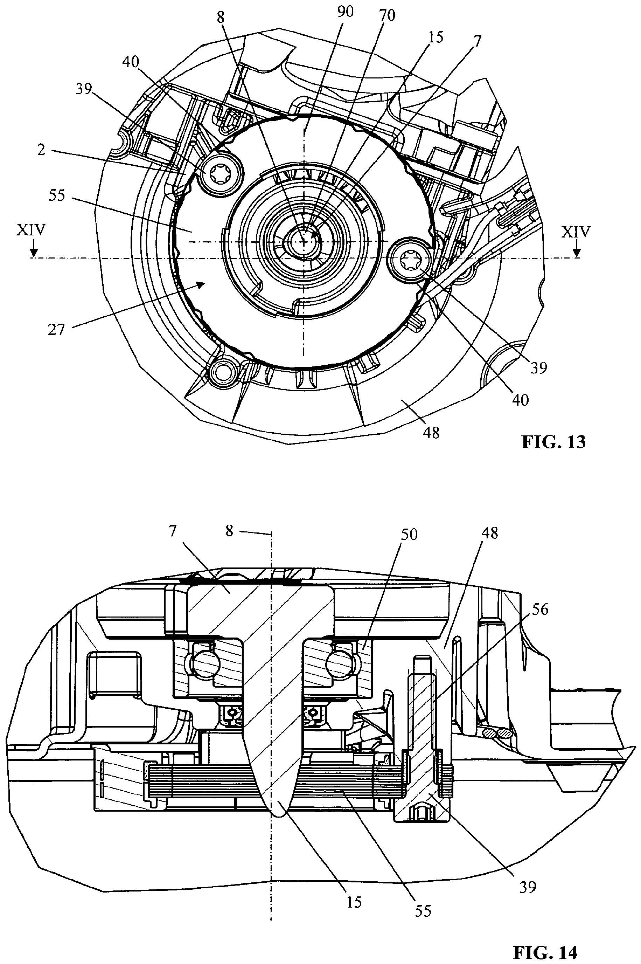

Fig. 13 zeigt den am Kurbelgehäuse 48 des Verbrennungsmotors 2 befestigten Stator 55 des Klauenpolgenerators 27 in einer Draufsicht. Im Stator 55 sind Bohrungen 40 vorgesehen, die sich in Richtung der Drehachse 8 erstrecken. Durch die Bohrungen 40 sind bündig Schraubbolzen 39 zur Befestigung des Stators 55 am Kurbelgehäuse 48 gesteckt. Am Kurbelgehäuse 48 sind für die Schraubbolzen 39 in Fig. 14 gezeigte Gewindebohrungen 56 vorgesehen. Im Ausführungsbeispiel nach der Fig. 14 sind zwei Bohrungen 40 vorgesehen, die am Umfangsrand des im Wesentlichen zylinderförmigen Stators 55 angeordnet sind. Die Bohrungen 40 können mit hoher Genauigkeit hergestellt werden, so dass die Lage der Stators 55 relativ zum Verbrennungsmotor 2 und zum Kurbelgehäuse 48 genau bestimmt ist, und damit auch die Lage von in Fig. 15 dargestellten Spulen 63 des Stators 55 relativ zur tatsächlichen Position 88 des Signalgebers im unteren Totpunkt UT. Da die Position der Spulen 63 bekannt und festgelegt ist, kann über das vom Signalgeber in den Spulen 63 erzeugte Spannungssignal auf die tatsächliche Position 88, bzw. das Vorliegen der Sollposition 77 des Signalgebers geschlossen werden.

Fig. 14 zeigt einen Schnitt durch einen der beiden Schraubbolzen 39 und durch den polygonkegelförmigen Abschnitt 15 der Kurbelwelle 7 entlang der senkrecht zur Zylinderlängsachse 90 verlaufenden Linie XIV-XIV in Fig. 13. Die Kurbelwelle 7 ist in einem Kurbelwellenlager 50 drehbar um die Drehachse 8 gelagert. Wie in Fig. 14 dargestellt, verläuft die Längsrichtung des Schraubbolzens 39 parallel zur Drehachse 8. Der Schraubbolzen 39 ist in die Gewindebohrung 56 des Kurbelgehäuses 48 geschraubt.

Fig. 15 zeigt einen Schnitt senkrecht zur Drehachse 8 der Kurbelwelle 7 des Arbeitsgeräts 1 durch den Klauenpolgenerator 27, den Magnetring 19, das Lüfterrad 9" und den polygonkegelförmigen Abschnitt 15 der Kurbelwelle 7. Der Klauenpolgenerator 27 umfasst den Stator 55 und den Rotor, der vom Lüfterrad 9", dem Magnetring 19 und den am Magnetring 19 fixierten Magneten 61 gebildet ist. Zwischen den Klauen des Stators 55 des Klauenpolgenerators 27 sind Pilzköpfe 56 des Stators 55 angeordnet. Die Längsrichtungen der Pilzköpfe 56 erstrecken sich radial zur Drehachse 8. Die Köpfe der Pilzköpfe 56 befinden sich radial zur Drehachse 8 außenliegend. Die Pilzköpfe 55 weisen stielartige Abschnitte auf, die von Spulen 63 umwickelt sind. In den Spulen 63 wird im Betrieb von den Magneten 61 das Spannungssignal zur Ermittlung des Zeitpunkts, zu dem die Zündkerze 12 (Fig. 3) gezündet wird, erzeugt. Die Spulen 63 sind Teil der in Fig. 3 dargestellten Zündeinrichtung 10. Die in den Spulen 63 induzierte Spannung wird nicht nur zur Bestimmung des Zeitpunkts, zu dem die Zündkerze 12 gezündet wird, sondern auch zur Generierung der benötigten Zündspannung zur Zündung der Zündkerze 12, genutzt.

Fig. 16 zeigt eine schematische Darstellung einer Gießform 41. Die Gießform 41 umfasst zwei Gießformteile 41, 42. In der in Fig. 16 gezeigten Darstellung ist die Gießform 41 geschlossen und enthält ein fertig gegossenes Lüfterrad 9". Beim Gießen des Lüfterrads 9" werden die Positioniermittel 20, 200 und die polygonkegelförmige Aufnahme 14 vom selben Gießformteil 42 geformt. Nach dem Gießen in der Gießform 41 ist die polygonkegelförmige Aufnahme 14 des Lüfterrads 9" fertig hergestellt. Es ist keine weitere Bearbeitung der polygonkegelförmigen Aufnahme 14 erforderlich. Zur Entformung des Lüfterrads 9" nach dem Gießen wird das Gießformteil 42 in Richtung einer Entformungsrichtung 72, und das Gießformteil 43 in Richtung einer Entformungsrichtung 73 geführt. Die Entformungsrichtung 72 und die Entformungsrichtung 73 sind entgegengesetzt zueinander orientiert und verlaufen beide parallel zur Drehachse 8.

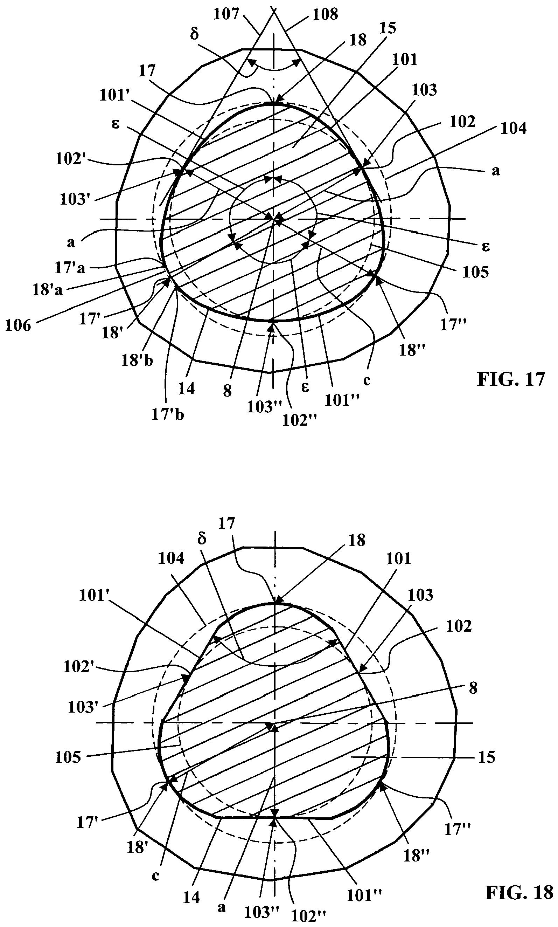

Fig. 17 zeigt den Querschnitt des polygonkegelförmigen Abschnitts 15 und der polygonkegelförmigen Aufnahme 14 im Einzelnen. Wie Fig. 17 zeigt, korrespondieren die Querschnitte des polygonkegelförmigen Abschnitts 15 und der polygonkegelförmigen Aufnahme 14 miteinander. Der Abstand eines Punkts des Querschnitts des polygonkegelförmigen Abschnitts 15 zur Drehachse 8 der Kurbelwelle entspricht näherungsweise dem Abstand des an der gleichen Stelle angeordneten Punkts der polygonkegelförmigen Aufnahme 14. Die polygonkegelförmige Aufnahme 14 und der polygonkegelförmige Abschnitt 15 besitzen bis auf fertigungsbedingte Toleranzen an jedem Punkt den gleichen Abstand zur Drehachse 8.

Zwischen den Punkten 17, 17' und 17", die jeweils den größten Abstand c zur Drehachse 8 besitzen, erstrecken sich Seitenoberflächen 101, 101' und 101". Die Seitenoberflächen 101, 101' und 101" besitzen jeweils Punkte 103, 103' und 103", die einen kleinsten Abstand a zur Drehachse 8 besitzen. Vorteilhaft beträgt der Abstand a etwa 4 mm bis 10 mm. Der Abstand c beträgt vorteilhaft etwa 5 mm bis 15 mm. In besonders vorteilhafter Gestaltung beträgt der Abstand a 6 mm bis 7 mm und der Abstand c 7 mm bis 9 mm.

Die Punkte 103, 103' und 103" liegen auf Seitenlinien 102, 102' und 102". Die Seitenoberfläche 101 erstreckt sich von der Seitenlinie 18" zur Seitenlinie 18 und enthält die Seitenlinie 102. Die Seitenoberfläche 101' erstreckt sich von der Seitenlinie 18 zur Seitenlinie 18' und enthält die Seitenlinie 102'. Die Seitenoberfläche 101" erstreckt sich von der Seitenlinie 18' zur Seitenlinie 18" und enthält die Seitenlinie 102". Jede Seitenoberfläche 101 besitzt eine als Winkel um die Drehachse 8 gemessene Länge ε. Im Ausführungsbeispiel ist die Länge ε für jede Seitenoberfläche 101, 101', 101" gleich und beträgt 120°. Bevorzugt beträgt die Länge ε 360° geteilt durch die Anzahl der Seitenoberflächen 101, 101', 101". Die Punkte 103, 103', 103" liegen auf einem Inkreis 105 jedes Querschnitts. Der Inkreis 105 besitzt einen Radius, der dem Abstand a entspricht. Jeder Querschnitt des polygonkegelförmigen Abschnitts 15 senkrecht zur Drehachse 8 besitzt einen Umkreis 104, auf dem die Seitenlinien 17, 17' und 17" liegen. Der Radius des Umkreises 104 entspricht dem Abstand c. Das Verhältnis des Radius des Umkreises 104 zum Radius des Inkreises 105 beträgt vorteilhaft von 1,05 bis 1,2, insbesondere von 1,09 bis 1,15.

Wie Fig. 17 auch zeigt, liegen die Seitenlinien 17, 17' und 17" jeweils im Bereich einer Krümmung. Auch die Seitenlinien 102, 102' und 102" liegen jeweils im Bereich einer Krümmung. Im Ausführungsbeispiel nach Fig. 17 ist der polygonkegelförmige Abschnitt im Querschnitt mit einer durchgehenden Krümmung ausgebildet. Der polygonkegelförmige Abschnitt 15 besitzt demnach an seiner Außenseite keinen geraden Bereich.

In einem alternativen Ausführungsbeispiel kann anstatt der Seitenlinien 17, 17' und 17" ein ebener Bereich 106 vorgesehen sein, der in Fig. 17 im Bereich der Seitenlinie 17' schematisch mit gestrichelter weißer Linie eingezeichnet ist. Bevorzugt ist an jeder Seitenlinie 17, 17', 17" ein ebener Bereich 106 angeordnet. Insbesondere sind alle ebenen Bereiche 106 gleich ausgebildet. Der ebene Bereich 106 ist vorteilhaft sehr klein. Die Breite des ebenen Bereichs 106 beträgt vorteilhaft von 0,2 mm bis 1,5 mm, insbesondere von 0,3 mm bis 1,0 mm. Im Ausführungsbeispiel ist ein ebener Bereich 106 mit einer in Umfangsrichtung gemessenen Breite von etwa 0,5 mm vorgesehen. Wie Fig. 17 auch zeigt, liegen an den in Umfangsrichtung angeordneten Enden des ebenen Bereichs Punkte 18'a und 18'b, die den größten Abstand zur Drehachse 8 besitzen. Die Punkte 18'a und 18'b liegen auf Seitenlinien 17'a und 17'b. Aufgrund der geringen Breite des ebenen Bereichs 106 kann der Punkt 18' näherungsweise als Punkt mit dem größten Abstand zur Drehachse 8 der Kurbelwelle 7 betrachtet werden und die Seitenlinie 17' näherungsweise als die Seitenlinie, auf der die Punkte mit dem größten Abstand zur Drehachse 8 liegen. Entsprechendes gilt für die Seitenlinien 17 und 17" sowie die Punkte 18 und 18", wenn hier entsprechende ebene Bereiche 106 vorgesehen werden.

Im Bereich der Seitenlinien 17, 17' und 17" verläuft der Querschnitt des polygonkegelförmigen Abschnitts 15 in einem Radius, der kleiner als der Radius des Inkreises 105 ist. Im Bereich der Seitenlinien 102, 102', 102" verläuft der Querschnitt in einem Radius, der größer als der Radius des Inkreises 105, insbesondere größer als der Radius des Umkreises 104, ist. Der Mittelpunkt des Inkreises 105 und der Mittelpunkt des Umkreises 104 liegen jeweils in der Drehachse 8. Die benachbarten Seitenoberflächen 101, 101', 101" schließen einen Winkel δ miteinander ein, der im Ausführungsbeispiel 60° beträgt. Der Winkel δ beträgt vorteilhaft nicht mehr als 180°. Der Winkel δ ist dabei jeweils in der in Umfangsrichtung liegenden Mitte der Seitenoberflächen 101, 101', 101" gemessen. Da die Seitenoberflächen 101, 101' und 101" gekrümmt verlaufen, ist der Winkel δ zwischen Tangenten 107 und 108 an die Mitten der Seitenoberflächen 101, 101', 101" gemessen. Der Winkel δ öffnet in Richtung auf die Drehachse 8 und ist in dem Bereich zwischen den Seitenoberflächen 101, 101', 101" gemessen, in dem die Drehachse liegt.

Im Ausführungsbeispiel ist der Querschnitt des polygonkegelförmigen Abschnitts 15 gleichmäßig ausgebildet. Alle Seitenoberflächen 101, 101' und 101" sind identisch ausgebildet. Sowohl die in Umfangsrichtung gemessene Länge ε als auch die Form der Seitenoberflächen 101, 101', 101" ist gleich. Auch der Radius zwischen den Seitenoberflächen 101, 101' und 101", der jeweils an den Seitenlinien 17, 17' und 17" verläuft, ist gleich. Die Krümmung des polygonkegelförmigen Abschnitts 15 ist in jedem Bereich konvex ausgebildet. Der polygonkegelförmige Abschnitt 15 besitzt keine Vertiefungen, Eindellungen oder dgl. Der Querschnitt verläuft stetig. Der Querschnitt besitzt keine Kanten oder Ecken. Der polygonkegelförmige Abschnitt 15 besitzt die Form eines Mehrecks, im Ausführungsbeispiel eines Dreiecks, bei dem die Ecken und die Seitenoberflächen abgerundet ausgebildet sind.

In alternativer Gestaltung können die Seitenoberflächen 101, 101', 101" teilweise gerade verlaufen. Dies ist in Fig. 18 schematisch gezeigt. Die Punkte 103, 103' und 103", die jeweils den geringsten Abstand a zur Drehachse 8 besitzen, sind in dem in Fig. 18 gezeigten Ausführungsbeispiel in einem ebenen Bereich der Außenfläche des polygonkegelförmigen Abschnitts 15 angeordnet. Im Vergleich zu dem in Fig. 17 gezeigten Ausführungsbeispiel ist der Abstand a der Punkte 103, 103' und 103" zur Drehachse 8 in Fig. 18 kleiner. Der Abstand c der Punkte 18, 18' und 18" ist gleich wie beim Ausführungsbeispiel in Fig. 17. Bis auf den geraden Bereich der Seitenoberflächen 101, 101' und 101" entspricht der Querschnitt des polygonkegelförmigen Abschnitts 15 und der der polygonkegelförmigen Aufnahme 14 der Gestaltung aus Fig. 17. Auch beim Ausführungsbeispiel nach Fig. 17 können zusätzlich an den Seitenlinien 17, 17', 17" ebene Bereiche 106 vorgesehen sein.

Die Seitenoberflächen sind in allen Ausführungsbeispielen Seitenflächen des polygonkegelförmigen Abschnitts.

## Patentansprüche

1. Handgeführtes Arbeitsgerät mit einem Verbrennungsmotor (2), der einen Zylinder (3) umfasst, in dem ein von einem Kolben (4) begrenzter Brennraum (5) ausgebildet ist, wobei der Kolben (4) im Betrieb über ein Pleuel (6) eine Kurbelwelle (7) um eine Drehachse (8) der Kurbelwelle (7) rotierend antreibt, wobei das Arbeitsgerät (1) eine Steuereinrichtung (13, 13', 13") und eine Zündeinrichtung (10) umfasst, wobei die Zündeinrichtung (10) eine Zündkerze (12) umfasst, wobei die Kurbelwelle (7) drehfest mit einem Träger für mindestens einen Signalgeber verbunden ist, wobei der Signalgeber an dem Träger fixiert ist, und wobei die Zündeinrichtung (10) unter Nutzung eines vom Signalgeber erzeugten Signals zu einem von der Steuereinrichtung (13, 13', 13") vorgegebenen Zündzeitpunkt die Zündkerze (12) zündet,
**dadurch gekennzeichnet, dass** der Träger eine polygonkegelförmige Aufnahme (14) besitzt, und dass die Kurbelwelle (7) einen polygonkegelförmigen Abschnitt (15) aufweist, der mit der polygonkegelförmigen Aufnahme (14) des Trägers korrespondiert und in der polygonkegelförmigen Aufnahme (14) angeordnet ist.

2. Handgeführtes Arbeitsgerät nach Anspruch 1,
**dadurch gekennzeichnet, dass** der polygonkegelförmige Abschnitt (15) mindestens zwei Seitenoberflächen (101, 101', 101") besitzt, die gegenüber einer Kreiskegelform abgeflacht sind.

3. Handgeführtes Arbeitsgerät nach Anspruch 2,
**dadurch gekennzeichnet, dass** mindestens eine, insbesondere alle Seitenoberflächen (101, 101', 101") mindestens teilweise abgerundet ausgebildet sind.

4. Handgeführtes Arbeitsgerät nach einem der Ansprüche 1 bis 3,
**dadurch gekennzeichnet, dass** der Winkel (δ) zwischen benachbarten Seitenoberflächen (101, 101', 101"), der zwischen den in Umfangsrichtung liegenden Mitten der Seitenoberflächen (101, 101', 101") gemessen ist, nicht größer als 180° ist.

5. Handgeführtes Arbeitsgerät nach einem der Ansprüche 1 bis 4,
**dadurch gekennzeichnet, dass** das Verhältnis der Anzahl der Signalgeber auf dem Träger zur Anzahl der Seitenoberflächen (101, 101', 101") ganzzahlig ist.

6. Handgeführtes Arbeitsgerät nach einem der Ansprüche 1 bis 5,
**dadurch gekennzeichnet, dass** in der Steuereinrichtung (13, 13', 13") für eine vorgegebene Position und Bewegungsrichtung des Kolbens (4) im Zylinder (3) eine Sollposition (77) des Signalgebers hinterlegt ist, und dass die tatsächliche Position (88) des Signalgebers in der vorgegebenen Position und Bewegungsrichtung des Kolbens (4) um weniger als 2,5° Kurbelwellenwinkel von der Sollposition (77) abweicht.

7. Handgeführtes Arbeitsgerät nach einem der Ansprüche 1 bis 6,
**dadurch gekennzeichnet, dass** der polygonkegelförmige Abschnitt (15) der Kurbelwelle (7) eine Mantelfläche (16) aufweist, dass die Mantelfläche (16) in einer Ebene (M), in der auch die Drehachse (8) liegt, in einem Winkel (γ) von 6° bis 12° zur Drehachse (8) orientiert ist.

8. Handgeführtes Arbeitsgerät nach einem der Ansprüche 1 bis 7,
**dadurch gekennzeichnet, dass** der polygonkegelförmige Abschnitt (15) der Kurbelwelle (7) mindestens drei Seitenlinien (17, 17', 17", 17'a, 17'b) aufweist, auf denen Punkte (18, 18', 18", 18'a, 18'b) liegen, die in Schnittebenen (S, S') senkrecht zur Drehachse (8) den größten Abstand (a) von der Drehachse (8) aufweisen.

9. Handgeführtes Arbeitsgerät nach Anspruch 8,
**dadurch gekennzeichnet, dass** an dem Träger ein Magnetring (19) angeordnet ist, an dem der mindestens eine Signalgeber fixiert ist, und dass Positioniermittel (20) zur Positionierung des Magnetrings (19) auf dem Träger relativ zu einer der Seitenlinien (17, 17', 17", 17'a, 17'b) des polygonkegelförmigen Abschnitts (15) vorgesehen sind.

10. Handgeführtes Arbeitsgerät nach einem der Ansprüche 1 bis 9,
**dadurch gekennzeichnet, dass** mehrere Signalgeber kreisförmig um die Drehachse (8) in regelmäßigen Abständen (b) zueinander an dem Träger fixiert sind.

11. Handgeführtes Arbeitsgerät nach einem der Ansprüche 1 bis 10,
**dadurch gekennzeichnet, dass** der Träger ein Schwungrad ist.

12. Handgeführtes Arbeitsgerät nach einem der Ansprüche 1 bis 11,
**dadurch gekennzeichnet, dass** der Träger ein Lüfterrad (9, 9', 9") ist und auf der dem Zylinder (3) abgewandten Seite (21) Luftleitelemente (22) trägt.

13. Handgeführtes Arbeitsgerät nach einem der Ansprüche 1 bis 12,
**dadurch gekennzeichnet, dass** der Signalgeber ein Magnet (11, 51, 61) ist, der in einer Spule (53, 63) bei Rotation des Trägers ein Spannungssignal induziert, und dass das Spannungssignal das vom Signalgeber erzeugte Signal ist.

14. Handgeführtes Arbeitsgerät nach einem der Ansprüche 1 bis 13,
**dadurch gekennzeichnet, dass** ein Drucksensor (44) am Kurbelgehäuse (48) zur Messung des Drucks im Kurbelgehäuse (48) angeordnet ist, dass der Drucksensor (44) zu mindestens einem bestimmten Zeitpunkt den Druck im Kurbelgehäuse (48) misst, und dass der Zeitpunkt von der Steuereinrichtung (13, 13', 13") in Abhängigkeit des Signals bestimmt ist.

15. Verfahren zur Herstellung eines Arbeitsgeräts nach einem der Ansprüche 1 bis 14, wobei die Kurbelwelle (7) ein Ausrichtungselement (24) aufweist, und wobei der polygonkegelförmige Abschnitt (15) der Kurbelwelle (7) derart geschliffen wird, dass der polygonkegelförmige Abschnitt (15) in vordefinierter Weise zum Ausrichtungselement (24) orientiert ist.

16. Verfahren nach Anspruch 15,
**dadurch gekennzeichnet, dass** der Träger in einer Gießform (41), die aus mehreren Gießformteilen (42, 43) zusammengesetzt ist, gegossen wird, dass am Träger Positioniermittel (20) zur Positionierung eines Magnetrings (19) auf dem Träger relativ zum polygonkegelförmigen Abschnitt (15) vorgesehen sind, und dass die polygonkegelförmige Aufnahme (14) des Trägers und die Positioniermittel (20) von demselben Gießformteil (42) geformt werden.
